Europäisches Patentamt

European Patent Office

Office européen des brevets

(11) Publication number: **0 226 444 B1**

# EUROPEAN PATENT SPECIFICATION

(45) Date of publication of patent specification: **24.04.91**    (51) Int. Cl.⁵: **F01D 17/16**, //F02C6/12

(21) Application number: **86309596.4**

(22) Date of filing: **10.12.86**

(54) **Variable nozzle turbocharger.**

(30) Priority: **11.12.85 US 807915**

(43) Date of publication of application:
**24.06.87 Bulletin 87/26**

(45) Publication of the grant of the patent:
**24.04.91 Bulletin 91/17**

(84) Designated Contracting States:
**AT BE DE ES FR GB IT NL SE**

(56) References cited:
**EP-A- 0 160 460**
**GB-A- 731 822**
**US-A- 2 860 827**
**US-A- 4 179 247**
**US-A- 4 502 836**

(73) Proprietor: **ALLIED-SIGNAL INC. (a Delaware corporation)**
**Columbia Road and Park Avenue P.O. Box 2245R**
**Morristown New Jersey 07960(US)**

(72) Inventor: **Fleury, Jean-Luc**
**1457-21St Street**
**Manhattan Beach California(US)**

(74) Representative: **Rees, David Christopher et al**
**Kilburn & Strode 30 John Street**
**London WC1N 2DD(GB)**

## Description

The present invention relates to turbomachinery and more particularly to an improved suspension design for the pivoting vane actuation mechanism of a variable nozzle turbocharger.

In turbomachinery in which the turbine is intended to drive a compressor or the like, it is often desirable to control the flow of motive gas to the turbine to improve its efficiency or operational range. In order to accomplish this, the nozzle passages leading to the turbine wheel may be of variable geometry. These variable geometry nozzle passages can be provided by means of a plurality of vanes which are pivotable so as to alter the configuration of the passages therebetween. The design of the suspension system used in association with the pivoting vane design is critical to prevent binding of either the suspension system or the vanes.

U.S. Patents Nos. 2,860,827 and 4,179,247 disclose designs to prevents binding of the pivoting vane actuation mechanism. However, none of the above mentioned designs are suspension systems for an actuation system which accommodates the thermal cycling experienced by the turbine housing as well as the components of the actuation system.

In accordance with one aspect of the present invention, there is provided a turbocharger in which gas is directed through an annular passage to the turbine, including a housing, a ring of guide vanes in the annular passage and pivotally mounted on an annular nozzle ring defining one boundary of the annular passage, an annular unison ring coupled to pivot the vanes by movement of the unison ring in relation to the nozzle ring, and a mounting for the unison ring which provides coaxial location between the nozzle ring and the unison ring about the turbine shaft, characterised in that the mounting comprises at least three circumferentially spaced dowels extending between a flange member carried by the turbocharger housing and the nozzle ring, and a roller mounted on each dowel.

The rollers provide a surface on which the periphery of the unison ring rides.

The invention tends to eliminate binding of the variable nozzle system, and maintains the unison ring and nozzle ring concentrically aligned during operation.

The nozzle ring is continuously aligned with the turbine side wall to provide an annular passage with a constant width.

According to another aspect of the invention, there is provided a method of assembling a turbocharger as claimed in any preceding claim, comprising mounting a flange member to the centre housing; pivotably mounting a plurality of vanes to an annular nozzle ring; slidably mounting at least three dowels into at least three bores in said nozzle ring; slidably and rotatably mounting a roller to each dowel; mounting, in rolling contact, an annular unison ring on said rollers; aligning said dowels with bores formed in the flange member and sliding the dowel ends therein; securing a turbine housing defining a volute therein to the flange member.

The invention may be carried into practice in various ways, and two embodiments will be described by way of example with reference to the accompanying drawings, in which:-

Figure 1 is a diagrammatic view illustrating a turbocharged engine system;

Figure 2 is a cross-sectional view of the internal components of an exhaust gas turbocharger;

Figure 3 is a sectional view of the turbine end of the turbocharger which illustrates the present invention;

Figure 4 is a partial sectional view of the turbine end of the turbocharger taken along line 4-4 of Figure 3;

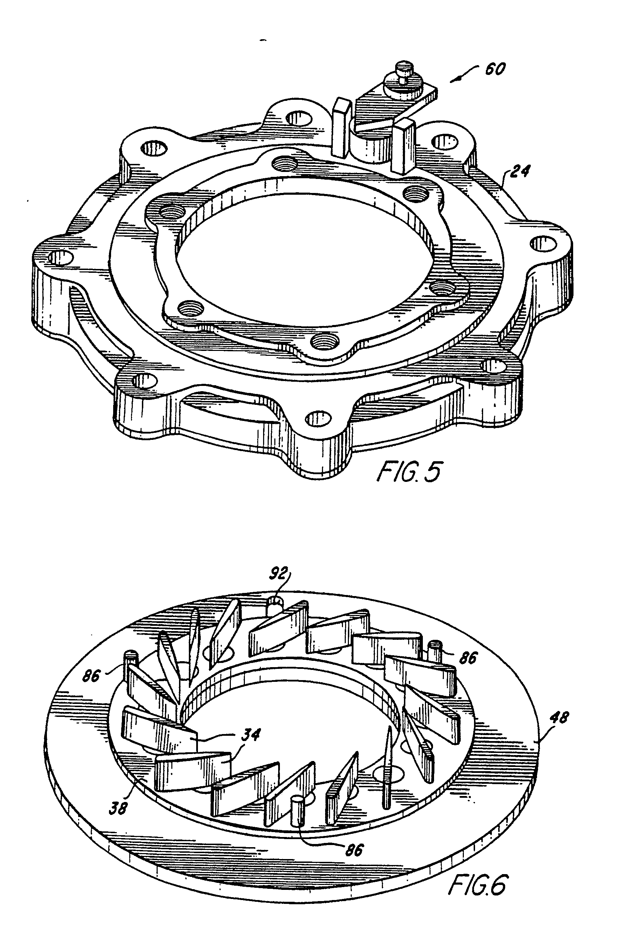

Figure 5 is a perspective view of the flange member;

Figure 6 is a perspective view of the assembled nozzle ring and unison ring;

Figure 7 is a partial sectional view corresponding to Figure 4 of an alternative embodiment; it is taken on line 7 of Figure 10;

Figure 8 is a partial sectional view taken along line 8 of Figure 10;

Figure 9 is a partial sectional view taken along line 9 of Figure 10;

Figure 10 is a partial end view of the nozzle ring of the alternative embodiment; and

Figure 11 is a partial sectional view taken along line 11 of Figure 10.

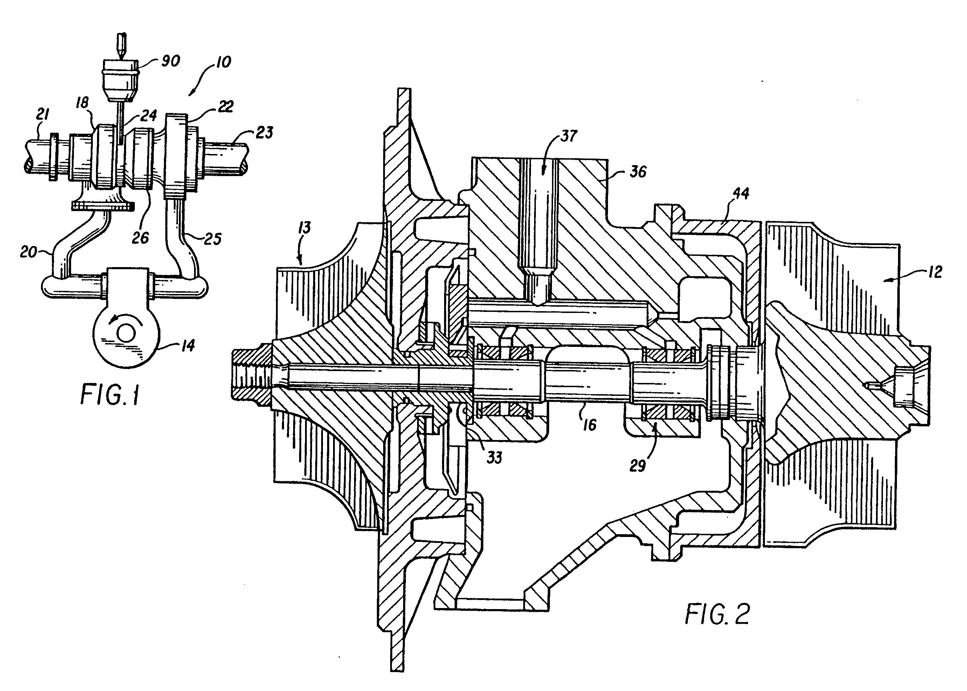

An engine system as shown in the Figures 1 to 3 includes turbomachinery in the form of a turbocharger 10 generally comprising a turbine wheel 12 and a compressor impeller 13 mounted on opposite ends of a common shaft 16. The turbine wheel 12 is disposed within a turbine housing 18 which includes an inlet 20 for receiving exhaust gas from an engine 14 and an outlet 21 for discharging the exhaust gas. The turbine housing 18 guides the engine exhaust gas into communication with and expansion through the turbine wheel 12 for rotatably driving the turbine wheel. Such driving of the turbine wheel simultaneously and rotatably drives the compressor impeller 13 which is carried within a compressor housing 22. The compressor housing 22, including an inlet 23 and outlet 25 and the compressor impeller 13 cooperate to draw in and compress ambient air for supply to the intake of the engine 14.

The turbine housing 18 is mounted to a flange member 24 which, in turn, is mounted to centre housing 26 and could be a part of it. The compressor housing 22 is mounted on the other side of the centre housing 26. The centre housing 26 includes a bearing means 29 for rotatably receiving and supporting the shaft 16. A thrust bearing assembly 33 is carried about the shaft adjacent the compressor housing for preventing axial excursions of the shaft 16. A heat shield 44 is positioned about the shaft 16 at the turbine end in order to insulate the centre housing 26 from the harmful effects of the exhaust gas.

Lubricant such as engine oil or the like is supplied via the centre housing 26 to the journal bearing means 29 and to the thrust bearing assembly 33. A lubricant inlet port 37 is formed in the centre housing 26 and is adapted for connection to a suitable source of lubricant such as filtered engine oil. The port communicates with a network of internal supply passages which are formed in the centre housing 26 to direct the lubricant to the appropriate bearings. The lubricant circulated to the bearings is collected in a suitable sump or drain for passage to appropriate filtering, cooling, and recirculation equipment, all in a well-known manner.

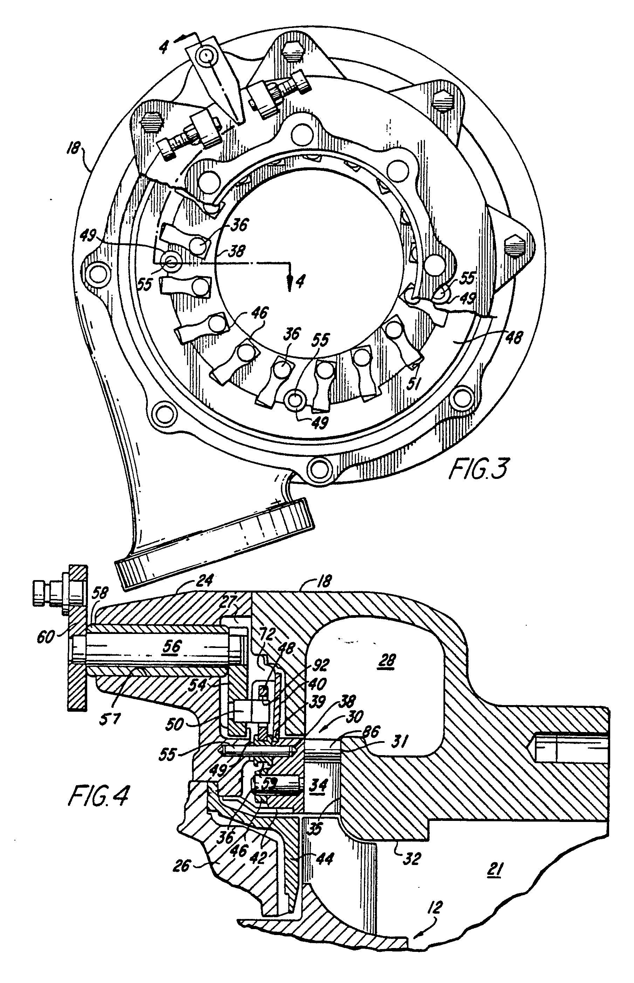

Figure 4 shows the turbine housing 18 which forms a generally scroll-shaped volute 28 which accepts the exhaust gas from the engine 14 and directs it onto the blades of the turbine wheel 12 through an annular passage 30. Thereafter, the exhaust gas flows axially through the turbine shroud 32 and exits the turbocharger through outlet 21 either into a suitable pollution-control device or the atmosphere. Placed within the annular passage way 30 are a plurality of pivotable vanes 34 which operate to vary the geometry of the annular passage 30 to control the angle at which the exhaust gas impacts the blades of the turbine wheel 12. This in turn controls the amount of energy imparted to the compressor wheel and ultimately the amount of air supplied to the engine.

The flange member 24 and the turbine housing 18 form between them a cavity 27 which houses the hardware used in conjunction with the variable geometry turbine to be described below. The annular passage 30 for the exhaust gas is defined between the inner side wall 31 of the turbine housing 18 and an annular nozzle ring 38. Located circumferentially around and within the annular passage 30 are a plurality of vanes 34. Each vane 34 is mounted to be capable of pivoting on the nozzle ring 38 on a vane pin 36 which can turn in a bore in the nozzle ring. Attached by welding to the outer end of each vane pin is a vane arm 46, the shape of which can best be seen in Figure 3. The nozzle ring is between each vane and its vane arm.

Located within passage 30 are a plurality of spacers 86. As shown in Figures 4 and 6, spacers 86 are located at the periphery of the plurality of vanes. They have an axial length (within the range of 0.005 to 0.015 cm) longer than the vane length. The spacers are press fitted in bores formed in the nozzle ring 38, though other methods could be used.

An annular unison ring 48 has a plurality of slots 51 on its inner radial surface, each of which receives a vane arm 46. At the inner periphery of the unison ring 48 are located at least three circumferentially spaced rollers 49. Rollers 49 are rotatably mounted on dowels 55 radially inwardly of the unison ring and with respective ends secured in bores in the flange member 24 and the nozzle ring 38. Dowels 55 have some axial clearance within these bores in order to allow nozzle ring 38 slight axial movement. Rollers 49 include an annular groove 59 therearound for acceptance of the inner periphery of the unison ring 48. Dowels 55 and rollers 49 could be provided additionally at the periphery fo the unison ring 48 if so desired. The dowels 55 shown in Figure 4, not only provide a mounting for the unison ring; they also hold and concentrically locate the nozzle ring 38 and prevent it from rotating.

The rollers 49 provide for ease of rotation of the unison ring 48 relative to the flange member 24 and together with dowels 55 ensure the concentricity between unison ring 48 and nozzle ring 38. The shape of the vane arms 46 as seen in Figure 3 must be such as to maintain basically a rolling action within slots 51 to avoid binding within unison ring 48 as it rotates to pivot vanes 34.

The flange member 24 includes a recessed portion for acceptance of the actuation system as will be described below. Formed in flange member 24 is a shoulder 72 which acts in cooperation with belleville spring 40. The inboard side (on the left in Figure 4) of the radially outer edge of spring 40 rests against the shoulder 72, and when assembled, the opposite side of the radially inner edge of the spring acts against the shoulder portion 39 of the nozzle ring 38 such that it loads the nozzle ring 38 and the spacers 86 against the turbine side wall 31. Shoulder 72 is continuous about flange 24 with the exception of a break to make room for the bell crank system defined below.

A tube member 42 which is generally cylindrically shaped with an annular bend therein, is slidably engageable within the inner radial surface of the nozzle ring 38. The tube member 42 acts as a seal in the event that any exhaust gas leaks behind the nozzle ring 38 and into the cavity 27 formed between the flange 24 and the turbine housing 18, thereby sealing the turbine housing 18 from the centre housing 26.

In order to rotate the unison ring 48 between its two extreme positions which correspond to the limits fo the geometry of the annular passage 30, a bell crank system is used. A pin 50 is rigidly connected to a first linkage member 54 at one end thereof. The pin 50 fits within a corresponding slot 92 within the unison ring 48 in order to transmit any movement in the bell crank to the unison ring 48. The first linkage member 54 is rigidly connected at its other end to a rod member 56. The rod 56 projects through a bore 57 in the flange member 24 to a point outside the turbocharger assembly. Bushing 58 is used in association with rod 56. The rod 56 is rigidly connected at its other end to a second linkage member 60 which in turn is connected to an actuator 90, shown in Figure 1. The actuator shown is a vacuum boost type which is well known in the art. Furthermore, it is envisioned that other actuator means can be used to control the movement of the vanes.

During operation, movement of the second linkage member 60 is translated into movement of the first linkage member 54 via rod 56. The existence of pin 50 will translate any movement of the linkage member 54 into rotational movement of unison ring 48. In turn, vane arms 46 roll against the side wall of slots 51 to pivot vanes 34 while nozzle ring 38 remains stationary. Thus, there is a change in the geometry of the plurality of passageways formed between adjacent vanes.

An alternative embodiment of the invention is shown in Figures 7 to 11. Figure 7 is a partial sectional view of the nozzle and unison rings, 138 and 148, respectively. Parts which correspond with parts in the embodiment of Figures 3 and 4 are given the same reference numerals increased by 100.

In the alternative embodiment the nozzle ring 138 is attached to the turbine housing 118 and defines with it the annular passageway 130, as best shown in Figure 8. Specifically, the nozzle ring 138 is bolted directly to the turbine housing 118 by a ring of bolts 141 and extending within a spacer 143 (Figure 8) which has an axial length slightly longer than the corresponding length of the vanes 134 (Figure 9). Spacers 134 prevent binding of the vanes as they pivot.

As shown in Figure 9, the vanes are mounted on the nozzle ring 138 by vane pins 136, which can turn in bores in the nozzle ring and are attached at one end to the vanes and at the other end to a vane arm 146. Arm 146 is attached to vane pin 136 by any suitable method of attachment such that the nozzle ring 138 is located between the vane 134 and the vane arm 146.

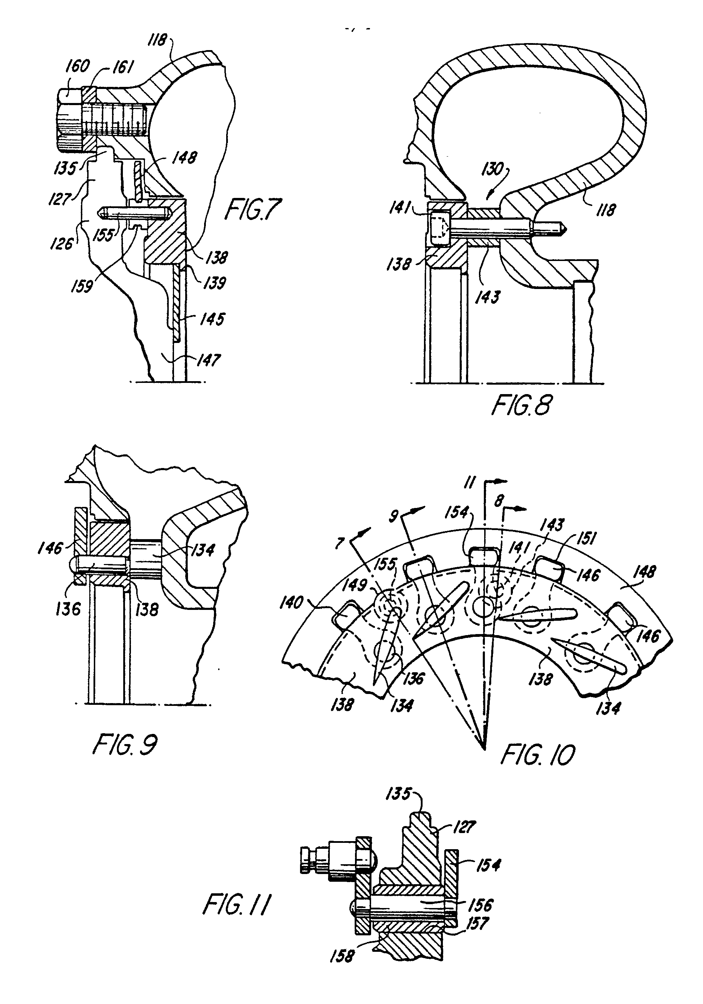

Figure 10 shows that unison ring 148 is an annular ring with a plurality of slots 151 on its inner radial surface. Each slot receives the outer end of a vane arm 146. Located at the internal periphery of the unison ring 148 are at least three spaced rollers 149. Rollers 149 are rotatably mounted on dowels 155 spaced radially inwardly of the unison ring and secured between the nozzle ring 138 and centre housing 126, each of which has bores for acceptance and location of the dowels. Rollers 149 include an annular groove 159 therearound for acceptance and guidance of the inner periphery of the unison ring. Rollers 149 and dowels 155 ensure the concentricity between the unison ring 148 and nozzle ring 138.

The alternative embodiment has eliminated several elements of the preferred embodiment, i.e.the flange member 24 and tube member 42. Centre housing 126 is different in that it includes a radially outwardly extending flange portion 127 having a bore 157 therethrough for acceptance of the actuation system as shown in Figure 11. Furthermore, the flange portion 127 includes shoulder 135 shaped to mate with the turbine housing 118 and an annular land 147 above the central bore.

As shown in Figure 7, an annular disc 145 is positioned about the turbocharger shaft such that its radially inner edge rests against the land 147 and its radially outer edge rests against a shoulder 139 formed on the inner periphery of nozzle ring 138. Disc 145 functions as a heat shield and seal to prevent heat and exhaust gas leakage around nozzle ring 138.

As best seen in Figure 11, the actuation system is similar to the actuation system in the preferred embodiment except in two respects. Rod 156 and bushing 158 extend through a bore 157 formed in the centre housing 126 as stated above and first linkage member 54 has been replaced by a linkage member 154 which is shaped like a vane arm 146. Linkage member 154 can therefore fit into a slot 151 in unison ring 148 in order to rotate it and the plurality of vanes 134.

## Claims

1. A turbocharger in which gas is directed through an annular passage (30, 130) to the turbine, including a housing (18, 24, 26), a ring of guide vanes (34) in the annular passage and pivotally mounted on an annular nozzle ring (38, 138) defining one boundary of the annular passage, an annular unison ring (48, 148) coupled to pivot the vanes by movement of the unison ring in relation to the nozzle ring, and a mounting (55, 59) for the unison ring (48) which provides coaxial location between the nozzle ring and the unison ring about the turbine shaft, characterised in that the mounting comprises at least three circumferentially spaced dowels (55, 155) extending between a flange member (24) carried by the turbocharger housing and the nozzle ring, and a roller (49, 159) mounted on each dowel.

2. A turbocharger as claimed in Claim 1, in which the periphery of the unison ring is in rolling contact with the rollers.

3. A turbocharger as claimed in any of the preceding claims, in which the unison ring has a circumferential ring of slots (51), each receiving one end of a vane arm (46), the other end of which is secured to one end of a pin (36) on which a vane (34) is pivotally mounted on the nozzle ring (38).

4. A turbocharger as claimed in any preceding claim, in which the nozzle ring is capable of axial movement in relation to the turbocharger housing.

5. A turbocharger as claimed in Claim 4, including a spring (40) for urging the nozzle ring towards a wall of the turbocharger housing defining the annular passage (30).

6. A turbocharger as claimed in any preceding claim, in which the nozzle ring (138) is mounted from the turbocharger housing.

7. A turbocharger as claimed in any preceding claim, including linkage means (60) mounted in the turbocharger housing and arranged to move the unison ring.

8. A turbocharger as claimed in any preceding claim including spacers (30, 130) between the nozzle ring and the opposite wall of the annular passage which are slightly longer axially than the vanes (34).

9. A turbocharger as claimed in Claim 8, in which the linkage for effecting movement of the unison ring (148) includes a link arm (154) having one end engaging a slot in the periphery of the unison ring (148) and the other end mounted to pivot in the housing (135).

10. A turbocharger as claimed in Claim 8, in which linkage for moving the unison arm includes a rod (56, 156) rotatably mounted in the turbocharger housing and coupled at one end to a link arm (54, 154) coupled to the unison ring and the other end coupled to external adjusting means.

11. A method of assembling a turbocharger as claimed in any preceding claim, comprising mounting a flange member to the centre housing; pivotably mounting a plurality of vanes to an annular nozzle ring; slidably mounting at least three dowels into at least three bores in said nozzle ring; slidably and rotatably mounting a roller to each dowel; mounting, in rolling contact, an annular unison ring on said rollers; aligning said dowels with bores formed in the flange member and sliding the dowel ends therein; securing a turbine housing defining a volute therein to the flange member.

## Revendications

1. Turbo-soufflante dans laquelle un gaz est dirigé à travers un passage annulaire (30,130 ) vers la turbine, comprenant un carter (18,24,26), un anneau d'aubes de guidage (34) placées dans le passage annulaire et montées de façon pivotante sur un anneau de tuyères (38, 138) définissant une limite du passage annulaire, un anneau de commande simultanée (48,148) relié de façon à faire pivoter les aubes par un mouvement de l'anneau de commande simultanée par rapport à l'anneau de tuyères, et un dispositif de montage (55,59) de l'anneau de commande simultanée (48) qui assure un positionnement coaxial relatif de l'anneau de tuyères et de l'anneau de commande simultanée autour de l'arbre de turbine, caractérisée en ce que le dispositif de montage comprend au moins trois goujons circonférentiellement espacés (55, 155),s'étendant entre une bride (24) portée par le carter de la turbo-soufflante et l'anneau de tuyères, et un galet (49,159) monté sur chaque goujon.

2. Turbo-soufflante suivant la revendication 1, dans laquelle la périphérie de l'anneau de commande simultanée est en contact de roulement avec les galets.

3. Turbo-soufflante suivant l'une quelconque des revendications précédentes, dans laquelle l'anneau de commande simultanée comporte une série annulaire circonférentielle de rainures (51), recevant chacune une extrémité d'un bras d'aube (46) dont l'autre extrémité est fixée à une extrémité d'un axe (36) sur lequel une aube (34) est montée de façon pivotante sur l'anneau de tuyères (38).

4. Turbo-soufflante suivant l'une quelconque des revendications précédentes, dans laquelle l'anneau de tuyères peut effectuer un mouvement axial par rapport au carter de la turbo-soufflante.

5. Turbo-soufflante suivant la revendication 4, comprenant un ressort (40) pour pousser l'anneau de tuyères vers une paroi du carter de turbo-soufflante définissant le passage annulaire (30).

6. Turbo-soufflante suivant l'une quelconque des revendications précédentes, dans laquelle l'anneau de tuyères (138) est montée sur le carter de turbo-soufflante.

7. Turbo-soufflante suivant l'une quelconque des revendications précédentes, comprenant des moyens de transmission (60) montés dans le carter de la turbo-soufflante et agencés pour déplacer l'anneau de commande simultanée.

8. Turbo-soufflante suivant l'une quelconque des revendications précédentes, comprenant des entretoises (30,130), disposées entre l'anneau de tuyères et la paroi opposée du passage annulaire, qui sont légèrement plus longues axialement que les aubes (34).

9. Turbo-soufflante suivant la revendication 8, dans laquelle la transmission pour déplacer l'anneau de commande simultanée (148) comprend une biellette (154) dont une extrémité s'engage dans une rainure de la périphérie de l'anneau de commande simultanée (148) et dont l'autre extrémité est montée de façon à pivoter dans le carter (135).

10. Turbo-soufflante suivant la revendication 8, dans laquelle la transmission de déplacement de l'anneau de commande simultanée comprend un arbre (56,156) monté de façon tournante dans le carter de la turbo-soufflante et dont une extrémité est accouplée à une biellette (54,154), reliée à l'anneau de commande simultanée, et dont l'autre extrémité est accouplée à des moyens extérieurs de réglage.

11. Méthode d'assemblage d'une turbo-soufflante suivant l'une quelconque des revendications précédentes, comprenant le montage d'une bride sur le carter central ; le montage pivotant d'une pluralité d'aubes sur un anneau de tuyères ; le montage coulissant d'au moins trois goujons dans au moins trois trous dudit anneau de tuyères ; le montage coulissant et tournant d'un galet sur chaque goujon ; le montage, en contact de roulement, d'un anneau de commande simultanée sur lesdits galets ; l'alignement desdits goujons avec des trous prévus dans la bride et l'introduction coulissante des extrémités des goujons dans ces trous ; et la fixation d'un carter de turbine, définissant intérieurement une volute, à la bride.

## Ansprüche

1. Turbolader, bei dem Gas durch einen Ringspalt (30, 130) zur Turbine geführt wird, mit einem Gehäuse (18, 24, 26), einem Ring von Leitschaufeln (34) im Ringspalt, die schwenkbar auf einem Düsenring mit kreisförmigem Querschnitt (38, 138) befestigt ist, welcher eine Begrenzung des Ringspaltes darstellt, einem übereinstimmenden Ring (48, 148) mit kreisförmigem Querschnitt, der so gekoppelt ist, daß er die Schaufeln durch Bewegen des übereinstimmenden Ringes in bezug auf den Düsenring schwenkt, und einer Befestigung (55, 59) für den übereinstimmenden Ring (48), der eine koaxiale Position zwischen dem Düsenring und dem übereinstimmenden Ring um die Turbinenwelle darstellt, **dadurch gekennzeichnet,** daß die Befestigungs mindestens drei in Umfangsrichtung versetzte Dübel (55, 155), die sich zwischen einem von dem Turboladergehäuse und dem Düsenring getragenen Flanschbauteil (24) erstrekken, und eine auf jedem Dübel befestigte Rolle (49, 159) aufweist.

2. Turbolader nach Anspruch 1, bei dem der Umfang des übereinstimmenden Ringes in Rollkontakt mit den Rollen steht.

3. Turbolader nach einem der vorausgehenden Ansprüche, bei dem der übereinstimmende Ring einen Umfangsring von Schlitzen (51) aufweist, deren jeder ein Ende eines Schaufelarmes (46) aufnimmt, während das andere Ende mit einem Ende eines Bolzens (36) befestigt ist, auf dem eine Schaufel (34) schwenkbar an dem Düsenring (38) befestigt ist.

4. Turbolader nach einem der vorausgehenden Ansprüche, bei dem der Düsenring in der Lage ist, eine axiale Bewegung in bezug auf das Turboladergehäuse auszuführen.

5. Turbolader nach Anspruch 4, mit einer Feder (40), die den Düsenring gegen eine den Ringspalt (30) definierende Wand des Turboladergehäuses drückt.

6. Turbolader nach einem der vorausgehenden Ansprüche, bei dem der Düsenring (138) an dem Turboladergehäuse befestigt ist.

7. Turbolader nach einem der vorausgehenden Ansprüche, mit einer Gelenkverbindung (60), die im Turboladergehäuse befestigt ist und die den übereinstimmenden Ring bewegen kann.

8. Turbolader nach einem der vorausgehenden Ansprüche, mit Abstandshaltern (30, 130) zwischen dem Düsenring und der entgegengesetzten Wand des Ringspaltes, die in axialer Richtung etwas länger sind als die Schaufeln (34).

9. Turbolader nach Anspruch 8, bei dem die Gelenkverbindung zur Erzielung der Bewegung des Ringes (148) einen Gelenkarm (154) aufweist, dessen eines Ende in Eingriff mit einem Schlitz im Umfang des Ringes (148) steht, und dessen anderes Ende schwenkbar im Gehäuse (135) befestigt ist.

10. Turbolader nach Anspruch 8, bei dem die Gelenkverbindung zur Bewegung des übereinstimmenden Armes eine Stange (56, 156) aufweist, die drehbar im Turboladergehäuse befestigt und am einen Ende mit einem mit dem übereinstimmenden Ring gekoppelten Gelenkarm (54, 154) gekoppelt ist, und dessen anderes Ende mit einer äußeren Einstellvorrichtung gekoppelt ist.

11. Verfahren zum Zusammenbauen eines Turboladers nach einem der vorausgehenden Ansprüche, bei dem ein Flanschbauteil mit dem zentrischen Gehäuse befestigt wird, eine Vielzahl von Schaufeln mit einem Düsenring mit kreisförmigem Querschnitt schwenkbar befestigt wird, mindestens drei Dübel in mindestens drei Bohrungen in dem Düsenring gleitend befestigt werden, eine Rolle mit jedem Dübel gleitend und drehbar befestigt wird, ein übereinstimmender Ring mit kreisförmigem Querschnitt auf den Rollen in Rollkontakt befestigt wird, die Dübel mit im Flanschbauteil ausgebildeten Bohrungen ausgerichtet werden, und die Dübelenden in diese Bohrungen eingeschoben werden, und ein darin eine Volute ausbildendes Turbinengehäuse mit dem Flanschbauteil befestigt wird.

FIG.2

FIG.1

FIG.3

FIG.4

FIG.5

FIG.6

FIG.7

FIG.8

FIG. 9

FIG. 10

FIG. 11